# EUROPÄISCHE PATENTSCHRIFT

(11) **EP 2 434 694 B1**
(45) Veröffentlichungstag und Bekanntmachung des Hinweises auf die Patenterteilung: **27.07.2016**
(21) Anmeldenummer: 11174971.9
(22) Anmeldetag: 22.07.2011
(51) Int. Cl.: H04L 12/403, H04L 12/28, H04L 29/12

(54) **Verfahren zum Ansprechen von Teilnehmern eines Gebäudeinstallationssystems**
Method for addressing participants of a building installation system
Procédé de réponse de participants d'un système d'installation de bâtiment

(30) Priorität: 23.09.2010 DE 102010037719
(43) Veröffentlichungstag der Anmeldung: 28.03.2012
(73) Patentinhaber: Insta Elektro GmbH, 58509 Lüdenscheid (DE)
(72) Erfinder: Groll, Roland, 58515 Lüdenscheid (DE)
(74) Vertreter: Haverkamp, Jens

(56) Entgegenhaltungen:
- US-A1- 2005 094 557
- BUSHBY S T: "BACnet<TM>: a standard communication infrastructure for intelligent buildings", AUTOMATION IN CONSTRUCTION, ELSEVIER SCIENCE PUBLISHERS, AMSTERDAM, NL, Bd. 6, Nr. 5-6, 1. September 1997 (1997-09-01), Seiten 529-540, XP004100759, ISSN: 0926-5805, DOI: 10.1016/S0926-5805(97)00029-0
- WOLFGANG GRANZER ET AL: "Gateway-free integration of BACnet and KNX using multi-protocol devices", INDUSTRIAL INFORMATICS, 2008. INDIN 2008. 6TH IEEE INTERNATIONAL CONFERENCE ON, IEEE, PISCATAWAY, NJ, USA, 13. Juli 2008 (2008-07-13), Seiten 973-978, XP031316171, ISBN: 978-1-4244-2170-1

## Beschreibung

Die Erfindung betrifft ein Verfahren zum Ansprechen von Teilnehmern eines Gebäudeinstallationssystems, welche Teilnehmer über ein Bussystem miteinander vernetzt sind.

Gebäudeinstallationssysteme dienen dem Zweck, unterschiedliche Installationen, wie Beleuchtung, Heizung, Belüftung und dergleichen datentechnisch miteinander zu vernetzen und je nach Auslegung des Systems unter Umständen auch mit der notwendigen Betriebsspannung zu versorgen. Die datentechnische Kommunikation wird typischerweise über ein Bussystem realisiert, an das die einzelnen Aktoren und/oder Sensoren der unterschiedlichen Installationen als Busteilnehmer angeschlossen sind. Ein solches Bussystem kann als Netzwerk angesprochen werden, bei dem eine Kommunikation über den Bus durch verschiedene Netzknoten erfolgt. Aufgrund der räumlich verteilten Anordnung der Teilnehmer werden derartige Gebäudeinstallationssysteme auch als verteilte Gebäudeinstallationssysteme bezeichnet.

Von einem solchen Busteilnehmer werden typischerweise ein oder mehrere Aktoren angesteuert und/oder ein oder mehrere Sensoren ausgelesen. Teil eines solchen Gebäudeinstallationssystems ist eine Steuereinheit, über die die Buskommunikation gesteuert wird. Derartige Gebäudeinstallationssysteme kommunizieren beispielsweise nach dem KNX-Standard.

Zum Verbinden derartiger Gebäudeinstallationssysteme mit anderen Systemen verfügt die Steuereinheit über ein Gateway oder ist an ein solches angeschlossen. Die Kommunikation über das Gateway zu den Steuereinheiten anderer Gebäudeinstallationssysteme oder von Teilen derselben erfolgt typischerweise breitbandig unter Verwendung des Internetprotokolls (IP). Zum Übersetzen der von der einen Steuereinheit an die andere Steuereinheit übertragenen Information dient üblicherweise ein dem Steuergerät zugeordneter Übertrager, der das Internetprotokoll in das in dem Bussystem benutzte Protokoll, beispielsweise ein User Datagram Protocol (UDP) oder ein Transmission Control Protocol (TCP) übersetzt. Die an diesen Bus angeschlossenen Teilnehmer können sodann über dieses Protokoll angesprochen werden. Neben solchen Gebäudeinstallationssystemen, deren Buskommunikation beispielsweise mit UDP oder TCP erfolgt, werden auch solche eingesetzt, bei denen die Kommunikation im Bus nach dem Internetprotokoll vorgesehen ist. Bei einer solchen Ausgestaltung ist jedem Teilnehmer ein Übertrager zugeordnet, der die IP-Datenfolge in das von jedem Teilnehmer erkannte Systemprotokoll, beispielsweise UDP oder TCP übersetzt wird.

Es versteht sich, dass bei einer solchen Ausgestaltung jeder Teilnehmer einen Übertrager benötigt, über den umgekehrt auch die von dem Teilnehmer an einen anderen Teilnehmer oder die Steuereinheit gesendete Information in das Internetprotokoll übersetzt wird. Zudem sind auf Grund der Zugänglichkeit IP-basierte Systeme hinsichtlich ihrer Funktionalität anfälliger. Auch wenn diesbezüglich Gebäudeinstallationssysteme, deren Buskommunikation nicht IP-basiert erfolgt, betriebssicherer sind, eignet sich das für die Kommunikation benutzte schmalbandige Protokoll nicht, um Anwendungen, die einen größeren Datenaustausch zur Folge haben, durchführen zu können. Daher ist ein solches Gebäudeinstallationssystem hinsichtlich der damit zu realisierenden Funktionalitäten eingeschränkt.

Aus der Veröffentlichung BUSHBY S. T.: "BACnet<TM> : a standard communication infrastructure for intelligent buildings", AUTOMATION IN CONSTRUCTION; ELSEVIER SCIENCE PUBLISHERS; AMSTERDAM; NL; Bd. 6. Nr. 5 - 6, Seiten 529 - 540, ist ein System für eine Gebäudesteuerung bekannt, dass sich auf ein BACnet-Netzwerk bezieht und ein Internet Protokoll (IP) nutzt.

Die US 2005 0094557 A1 beschreibt eine Verteilung von Multimediadaten in Echtzeit in einem lokalen Netzwerk mittels einem RTCP/TCP/IP Protokoll.

Ausgehend von diesem diskutierten Stand der Technik liegt der Erfindung daher die Aufgabe zu Grunde, ein eingangs genanntes Verfahren zum Ansprechen von Teilnehmern eines Gebäudeinstallationssystems dergestalt weiterzubilden, dass der Betrieb des Bussystems nicht nur die Betriebssicherheit von nicht IP-basierten Systemen aufweist, sondern welches sich ebenfalls für Funktionalitäten eignet, die bisher nur IP-basierten Systemen vorbehalten waren.

Gelöst wird diese Aufgabe durch ein Verfahren mit den Merkmalen des Anspruches 1. Erfindungsgemäß ist ein eingangs genanntes Verfahren vorgesehen, bei dem zum Betreiben des Gebäudeinstallationssystems wenigstens zwei Kommunikationsebenen verwendet und zu diesem Zweck jedem Teilnehmer eine der Anzahl der verwendeten Kommunikationsebene entsprechende Anzahl an Adressen zugeordnet werden, wobei eine Adresse einer höheren Kommunikationsebene, ausgelegt für eine IPbasierte Kommunikation, und eine weitere Adresse einer niedrigeren Kommunikationsebene zugeordnet sind und wobei auf der niedrigeren Kommunikationsebene die Kommunikation für einen Basisbetrieb des Gebäudeinstallationssystems erfolgt und die höhere Kommunikationsebene für Komfortfunktionen und/oder Systemdienste des Gebäudeinstallationssystems genutzt wird.

Bei diesem Verfahren werden in einem Gebäudeinstallationssystem zumindest zwei Kommunikationsebenen verwendet, auf denen die Teilnehmer angesprochen werden bzw. auf denen die Teilnehmer untereinander kommunizieren können. Die Kommunikationsebenen unterscheiden sich hinsichtlich ihrer Breitbandigkeit, mithin hinsichtlich der auf der jeweiligen Kommunikationsebene zu übertragenden Datenmenge. Für die Zwecke der Kommunikation in mehreren Ebenen ist jedem Teilnehmer für jede Kommunikationsebene eine eigene Adresse zugeordnet. Eine erste Kommunikationsebene ist breitbandig ausgelegt und wird IP-basiert betrieben. Somit verfügt jeder Teilnehmer über eine IP-Adresse. Eine weitere Kommunikationsebene - eine zu der vorgenannten Kommunikationsebene niedrigere Kommunikationsebene - wird schmalerbandig betrieben, beispielsweise UDP-basiert oder TCP-basiert. Folglich ist jedem Teilnehmer auch eine solche Adresse zugeordnet. Die niedrigere Kommunikationsebene wird für die für einen Basisbetrieb des Gebäudeinstallationssystems notwendige Kommunikation genutzt. Mithin arbeitet das Gebäudeinstallationssystem auch dann ordnungemäß und fehlerfrei, wenn eine Kommunikation auf der höheren, IP-basierten Kommunikationsebene nicht möglich ist oder nicht durchgeführt werden soll. Im Rahmen eines Gebäu-*( weiter: ursprünglich eingereichte Unterlagen Seite 4 Zeile 1)* anderen Gebäudeinstallationssystemen, beispielsweise über das Internet erfolgt auf der höheren Kommunikationsebene. Dieses erlaubt es auch, dass von einem Teilnehmer eines ersten Gebäudeinstallationssystems über eine Steuereinheit unter Zwischenschaltung des Internets auf einen Teilnehmer eines zweiten Gebäudeinstallationssystems zugegriffen werden kann. Dieses setzt voraus, dass jeder Teilnehmer eine IP-Adresse hat.

Zum Betreiben der beiden vorgeschriebenen Kommunikationsebenen wird ein und dasselbe Netzwerk genutzt, sodass für die Durchführung des Verfahrens keine zusätzliche Verdrahtung oder Hardware benötigt wird. Lediglich die Teilnehmer müssen Speicherplätze für die verschiedenen Adressen bereitstellen.

Ein solches Gebäudeinstallationssystem kann neben den beiden vorbeschriebenen Kommunikationsebenen eine oder auch mehrere weitere Kommunikationsebenen aufweisen. Eine weitere Kommunikationsebene kann beispielsweise unter Verwendung der Systemadressen der Teilnehmer betrieben werden. Auf dieser Kommunikationsebene können etwa Prioritäten in der Kommunikation festgelegt werden.

Die Kommunikation auf der für den Basisbetrieb des Gebäudeinstallationssystems verwendeten Kommunikationsebene erfolgt vorzugsweise als Multicast, sodass jeder Teilnehmer des Gebäudeinstallationssystems neben einer für die höheren Kommunikationsebene typischen IP-Adresse eine Multicast-Adresse zugeteilt bekommen hat. Die Multicast-Adressen werden innerhalb des Bussystems vergeben. Die für die höhere Kommunikationsebene notwendigen IP-Adressen werden von einer Steuereinheit (Server) vergeben. Auf der IP-Kommunikationsebene ist es ebenfalls möglich eine Kommunikation mit eigener Adressauflösung (ARP) durchzuführen.

Die Beschreibung des Verfahrens verdeutlicht, dass auf der Hardware eines Bussystems zwei Kommunikationsebenen betrieben werden. Dabei wird man die Kommunikation für einen Basisbetrieb des Gebäudeinstallationssystems auf einer solchen Kommunikationsebene durchführen, auf die von außen generell nicht zugegriffen werden kann. Damit ist die Abhör- und Sabotagesicherheit eines solchen Gebäudeinstallationssystems gegenüber einem herkömmlichen IP-basierten nicht unerheblich erhöht, ohne dass hierfür ein nennenswert höherer Aufwand, vor allem hinsichtlich der Kosten eines solchen Systems, in Kauf genommen werden müsste.

Wenn im Vorstehenden davon gesprochen worden ist, dass mit dem beschriebenen Verfahren auch eine Kommunikation zwischen verschiedenen Gebäudeinstallationssystemen möglich ist, beinhaltet dieses eine Kommunikation zwischen Teilen eines Gebäudeinstallationssystems mit anderen Teilen desselben und/oder mit der Gesamtheit des Gebäudeinstallationssystems.

Die Erfindung ist anhand von Ausführungsbeispielen beschrieben worden. Ohne den Umfang der Ansprüche zu verlassen, ergeben sich für einen Fachmann jedoch zahlreiche weitere Ausgestaltungen, die Erfindung umsetzen zu können.

## Patentansprüche

1. Verfahren zum Ansprechen von Teilnehmern eines Gebäudeinstallationssystems, welche Teilnehmer über ein Bussystem miteinander vernetzt sind, **dadurch gekennzeichnet, dass** zum Betreiben des Gebäudeinstallationssystems wenigstens zwei Kommunikationsebenen derart verwendet und zu diesem Zweck jedem Teilnehmer eine der Anzahl der verwendeten Kommunikationsebene entsprechende Anzahl an Adressen derart zugeordnet werden, wobei die Mehrfachadressierung zu jedem Zeitpunkt genutzt wird und wobei eine Adresse einer höheren Kommunikationsebene, ausgelegt für eine IP-basierte Kommunikation, wobei die Kommunikation auf der höheren Ebene breitbandig erfolgt und die Teilnehmer zu diesem Zweck eine IP-Adresse erhalten, und eine weitere Adresse einer niedrigeren Kommunikationsebene zugeordnet sind, wobei die Kommunikation auf der niedrigeren Ebene schmalbandig erfolgt, und wobei auf der niedrigeren Kommunikationsebene die Kommunikation für einen Basisbetrieb des Gebäudeinstallationssystems erfolgt und die höhere Kommunikationsebene für Komfortfunktionen und/oder Systemdienste des Gebäudeinstallationssystems genutzt wird, so dass das Gebäudeinstallationssystem auch dann ordnungsgemäß und fehlerfrei in der niedrigeren Kommunikationsebene arbeitet, wenn eine Kommunikation auf der höheren, IPbasierten Kommunikationsebene nicht möglich ist oder nicht durchgeführt werden soll.

2. Verfahren nach Anspruch 1, **dadurch gekennzeichnet, dass** für eine Kommunikation mit dem Internetprotokoll jedem Teilnehmer ein Übertrager zugeordnet ist, der eine IP-Datenfolge in ein von jedem Teilnehmer erkanntes Systemprotokoll übersetzt wird, und dass jedem Teilnehmer ein Übertrager zugeordnet wird, der umgekehrt auch die von dem Teilnehmer gesendete Information in das Internetprotokoll übersetzt.

3. Verfahren nach Anspruch 1 oder 2, **dadurch gekennzeichnet, dass** Beleuchtungs-, Heizungs-, Belüftungs-, Lichtschalter-, Jalousien- und/oder Heizungsregelungs-Teilnehmer vorhanden sind.

4. Verfahren nach Anspruch 3, **dadurch gekennzeichnet, dass** die Kommunikation auf der niedrigeren Ebene von einem sendenden Teilnehmer an zumindest einen empfangenen Teilnehmer als Multicast ausgeführt wird und die Teilnehmer zu diesem Zweck eine Multicast-Adresse erhalten.

5. Verfahren nach einem der Ansprüche 1 bis 4, **dadurch gekennzeichnet, dass** zum Betreiben des Gebäudeinstallationssystems eine weitere niedrigere Kommunikationsebene genutzt wird und die Teilnehmer zu diesem Zweck zusätzlich eine dieser weiteren niederen Kommunikationsebene zugeordnete Adresse erhalten.

6. Verfahren nach Anspruch 5, **dadurch gekennzeichnet, dass** die Teilnehmer zum Kommunizieren auf dieser weiteren niederen Kommunikationsebene eine Systemadresse erhalten.

## Claims

1. Method for addressing participants of a building installation system, said participants being networked with one another via a bus system, **characterised in that**, for the operation of the building installation system, at least two communications levels are used, and for this purpose each participant is allocated a number of addresses corresponding to the number of communications levels used, wherein the multiple addressing is used at any point of time, and wherein one address is of a higher communication system, configured for an IP-based communication, wherein the communication on the higher level is carried out as broadband, and for this purpose the participants receive an IP address, and are allocated a further address of a lower communication level, wherein the communication on the lower level is narrow-band, and wherein on the lower communication level the communication is effected for a basic operation of the building installation system, and the higher communication level is used for comfort functions and/or system services of the building installation system, such that the building installation system also works in the proper manner and free of faults on the lower communication level if a communication on the higher IP-based communication level is not possible or should not be carried out.

2. Method according to claim 1, **characterised in that**, for a communication with the Internet protocol, a converter is allocated to each participant, which converts an IP data sequence into a system protocol which is recognised by each participant, and that a converter is allocated to each participant which conversely converts the information sent by the participant into the Internet protocol.

3. Method according to claim 1 or 2, **characterised in that** lighting, heating, ventilation, light switch, roller blind, and/or heating regulation participants are involved.

4. Method according to claim 3, **characterised in that** the communication on the lower level is carried out from a sending participant to at least one receiving participant as a multicast, and for this purpose the participants receive a multicast address.

5. Method according to one of claims 1 to 4, **characterised in that**, for the operation of the building installation system, a further lower communication level is used, and for this purpose the participants additionally receive an address allocated to this further low communication level.

6. Method according to claim 5, **characterised in that** the participants receive a system address for communicating on this further low communication level.

## Revendications

1. Procédé de réponse de participants à un système d'installation de bâtiment, lesquels participants sont reliés en réseau par un système bus, **caractérisé en ce que**, pour faire fonctionner le système d'installation de bâtiment, au moins deux niveaux de communication sont utilisés de telle sorte et dans ce but, qu'à chaque participant est affecté un nombre d'adresses correspondant au nombre de niveaux de communication utilisés, l'adressage multiple étant utilisé à tout moment et une adresse étant affectée à un niveau supérieur de communication, conçu pour une communication basée sur IP, la communication s'effectuant à bande large sur le niveau supérieur et les participants recevant à cet effet une adresse IP, et une autre adresse étant affectée à un niveau inférieur de communication, la communication s'effectuant à bande étroite sur le niveau inférieur, et la communication s'effectuant sur le niveau inférieur de communication pour assurer les fonctions de base d'un système d'installation de bâtiment et le niveau supérieur de communication étant utilisé pour les fonctions de confort et/ou les services système du système d'installation de bâtiment, de sorte que le système d'installation de bâtiment fonctionne correctement et sans erreur dans le niveau inférieur de communication, même si une communication n'est pas possible ou ne doit pas se faire sur le niveau supérieur, basé sur IP.

2. Procédé selon la revendication 1, **caractérisé en ce que**, pour une communication avec le protocole internet, à chaque participant est affecté un transmetteur qui traduit une suite de données IP dans un protocole système reconnu par chaque participant et **en ce qu'**à chaque participant est affecté un transmetteur, qui traduit également dans l'autre sens les informations émises par le participant dans le protocole internet.

3. Procédé selon la revendication 1 ou 2, **caractérisé en ce qu'**il existe des participants de réglage de l'éclairage, du chauffage, de la ventilation, des interrupteurs, des stores et/ou du chauffage.

4. Procédé selon la revendication 3, **caractérisé en ce que** la communication sur le niveau inférieur est réalisée en multicast par un participant émetteur à au moins un participant récepteur et les participants recevant à ce titre une adresse multicast.

5. Procédé selon l'une des revendications 1 à 4, **caractérisé en ce que**, pour faire fonctionner le système d'installation de bâtiment, un niveau inférieur supplémentaire de communication est utilisé et les participants recevant en plus, à cet effet, une adresse affectée à ce niveau inférieur supplémentaire de communication.

6. Procédé selon la revendication 5, **caractérisé en ce que** les participants reçoivent une adresse système pour communiquer sur ce niveau inférieur supplémentaire de communication.
